Europäisches Patentamt

European Patent Office

Office européen des brevets

(19)

(11) Numéro de publication : **0 519 788 A1**

## (12) DEMANDE DE BREVET EUROPEEN

(21) Numéro de dépôt : **92401614.0**

(22) Date de dépôt : **10.06.92**

(51) Int. Cl.⁵ : **G01L 5/00,** G01L 1/22

(30) Priorité : **11.06.91 FR 9107088**

(43) Date de publication de la demande :
**23.12.92 Bulletin 92/52**

(84) Etats contractants désignés :
**AT BE CH DE DK ES FR GB GR IT LI LU NL PT SE**

(71) Demandeur : **SOLLAC**
**Immeuble Elysées La Défense, 29 Le Parvis**
**F-92800 PUTEAUX (FR)**

(71) Demandeur : **CLECIM**
**10, avenue de l'Entreprise**
**F-95863 Cergy-Pontoise (FR)**

(72) Inventeur : **Vatant, Robert**
**Impasse de la Valette**
**F-42400 Saint-Chamond (FR)**
Inventeur : **Pouchelle, Régis**
**64, rue de Folkestone**
**F-Dunkerque (FR)**
Inventeur : **Werquin, Dominique**
**41 Allée des Eglantiers**
**F-59229 Teteghem (FR)**
Inventeur : **Becuwe, Jean-Marie**
**68 rue du Canada**
**F-59240 Dunkerque (FR)**

(74) Mandataire : **Lanceplaine, Jean-Claude et al**
**CABINET LAVOIX 2, Place d'Estienne d'Orves**
**F-75441 Paris Cédex 09 (FR)**

(54) **Dispositif de mesure des efforts appliqués sur les rouleaux de coulée continue.**

(57)    La présente invention a pour objet un dispositif de mesure des efforts appliqués sur les rouleaux de coulée continue disposés en vis à vis et tournant dans des paliers (12) d'extrémité et intermédiaires.

Chaque palier (12) est équipé d'au moins une jauge de contraintes et de préférence deux (17, 18) intégrées dans le corps (16) du palier (12). Chaque jauge de contraintes est montée dans une cavité (19, 21) ménagée dans le corps dudit palier.

FIG.3

EP 0 519 788 A1

La présente invention a pour objet un dispositif de mesure des efforts appliqués sur les rouleaux de coulée continue.

Les installations de coulée continue de produits, tels que des brames, comportent généralement un moule courbe. L'acier se solidifie le long d'un arc circulaire et il est nécessaire de redresser la brame pour obtenir sur un train horizontal de rouleaux, un produit rectiligne dressé, qui est ensuite découpé à des longueurs désirées, sur une table d'évacuation.

Pour guider le produit, soutenir la peau du produit et appliquer les efforts de décintrage, les installations de coulée continue de brames utilisent des nappes de rouleaux disposées en vis à vis qui sont en général regroupées en éléments dits segments ou cages qui contiennent chacun deux nappes opposées constituant chacun une partie du guidage globale de l'installation.

Chacun des segments comporte ainsi de dix à douze rouleaux en moyenne.

La structure de chacun des segments, bien qu'apparemment semblable de la tête de l'installation à sa sortie, varie cependant selon la position et le rôle du segment tout au long du guidage.

On peut ainsi établir une succession de zones comportant un segment situé sous la lingotière qui assure le supportage du produit au début de sa solidification, une succession de segments constituant chacun une partie de l'arc circulaire de l'ensemble dit du "refroidissement secondaire" et des segments d'extraction et de décintrage dans lesquels s'exercent les efforts de dressage du produit.

Dans la zone d'extraction et éventuellement dans la zone de refroidissement secondaire, sont parfois insérés des segments particuliers dits de "réduction douce" comportant des rouleaux de diamètre réduit et de pas plus court que ceux des autres segments.

Cette réduction douce est en particulier nécessaire pour améliorer par un léger laminage la compacité et l'homogénéité interne des brames.

Quel que soit la fonction du segment, la nature du rouleau qui l'équipe est fondamentale pour ce qui est de contenir le gonflement possible de la brame qui crée lorsqu'il se produit, des défauts internes rédhibitoires. En plus du confinement de la brame, la fonction de réduction douce est devenue fondamentale pour la santé interne du produit.

Ainsi, la connaissance permanente de l'état de l'installation est un facteur nécessaire à l'obtention de la qualité du produit aussi bien qu'à la maîtrise de la disponibilité de cette installation.

Pour cette raison, il est nécessaire de connaître en permanence, au cours de la coulée, les efforts sur les paliers des rouleaux dans les différentes zones.

Jusqu'à présent, les rouleaux tournent dans les paliers d'extrémité ou intermédiaires et pour connaître ces efforts, des cellules pourvues de jauges de contraintes sont placées sous ces paliers et raccordées à un système de traitement.

Ce montage est mécaniquement compliqué et les différents éléments de chaque palier, c'est à dire le roulement, le corps du palier, la cellule de contrôle d'efforts et la traverse support des rouleaux du segment, sont superposés ce qui augmente l'encombrement.

Cette disposition amène donc un risque d'instabilité néfaste en particulier dans les segments où les efforts tangentiels, dans le sens de défilement de la brame sont importants par rapport aux efforts normaux perpendiculaires à la surface de ladite brame.

En effet, les cellules de contrôle d'efforts ont souvent des dimensions telles qu'il est difficile de les installer et qui, lorsque cela est possible, viennent augmenter la distance rouleaux-traverses support et par là, le moment de torsion appliqué à la structure qui subit dans ce cas des sollicitations pouvant conduire jusqu'au renversement.

Ceci se rencontre en particulier dans les zones de décintrage et plus encore dans les zones de réduction douce ou sur les rouleaux moteurs pour lesquels l'effort tangentiel est plus important.

De plus, dans ces zones, les rouleaux sont de plus faibles diamètres et, pour des questions de résistance des roulements, sont supportés par des paliers d'extrémité et des paliers intermédiaires situés entre lesdits paliers d'extrémité.

Ces paliers ont donc des dimensions plus petites si bien que le montage des cellules de contrôle d'efforts utilisées jusqu'à présent est difficile voire impossible.

La présente invention a pour but de remédier à ces inconvénients.

La présente invention a pour objet un dispositif de mesure des efforts appliqués sur les rouleaux de coulée continue par exemple de brames, disposés en vis à vis et regroupés en segments qui contiennent deux nappes opposées de rouleaux, lesdits rouleaux tournant dans des paliers d'extrémité et des paliers intermédiaires situés entre lesdits paliers d'extrémité, caractérisé en ce que chaque palier est équipé d'au moins une jauge de contraintes et de préférence deux intégrées dans le corps dudit palier, chaque jauge de contraintes étant montée dans une cavité ménagée dans le corps dudit palier.

Selon d'autres caractéristiques de l'invention :
- une jauge de contraintes est placée dans un plan vertical passant par l'axe du palier et perpendiculaire à l'axe de la brame pour mesurer les efforts normaux et une jauge de contraintes est placée dans un plan incliné passant par l'axe du palier et déterminant avec ledit plan vertical un angle sensiblement égal par exemple à 45° pour mesurer les efforts tangentiels dans le sens de coulée,
- une jauge de contraintes est disposée dans une cavité ménagée dans le fond du corps du palier,

- une jauge de contraintes est disposée dans une cavité ménagée dans l'une des parois latérales du corps du palier,

- les cavités sont fermées par une pièce d'obturation,

- chaque jauge de contraintes est placée dans un plan incliné de part et d'autre d'un plan vertical passant par l'axe du palier et perpendiculaire à l'axe de la brame, et déterminant avec ledit plan vertical un angle sensiblement égal par exemple à 45° pour les mesures combinées des efforts normaux et tangentiels,

- une jauge de contraintes est placée dans un plan vertical parallèle au plan passant par l'axe du palier et perpendiculaire à l'axe de la brame pour mesurer les efforts normaux et une jauge de contraintes est placée dans un plan incliné passant par l'axe du palier déterminant avec ledit plan vertical un angle sensiblement égal par exemple à 45° pour mesurer les efforts tangentiels,

D'autres caractéristiques et avantages de l'invention apparaîtront au cours de la description qui va suivre donnée uniquement à titre d'exemple et faite en référence aux dessins annexés, dans lesquels:

- la Fig. 1 est une vue schématique d'une installation de coulée continue,

- la Fig. 2 est une vue schématique de deux rouleaux superposés de l'installation de coulée continue,

- la Fig. 3 est une vue schématique en coupe d'un premier mode de réalisation d'un palier muni du dispositif de mesure selon l'invention,

- les Figs. 4 et 5 sont deux vues schématiques en coupe de deux autres modes de réalisation d'un palier muni du dispositif de mesure selon l'invention.

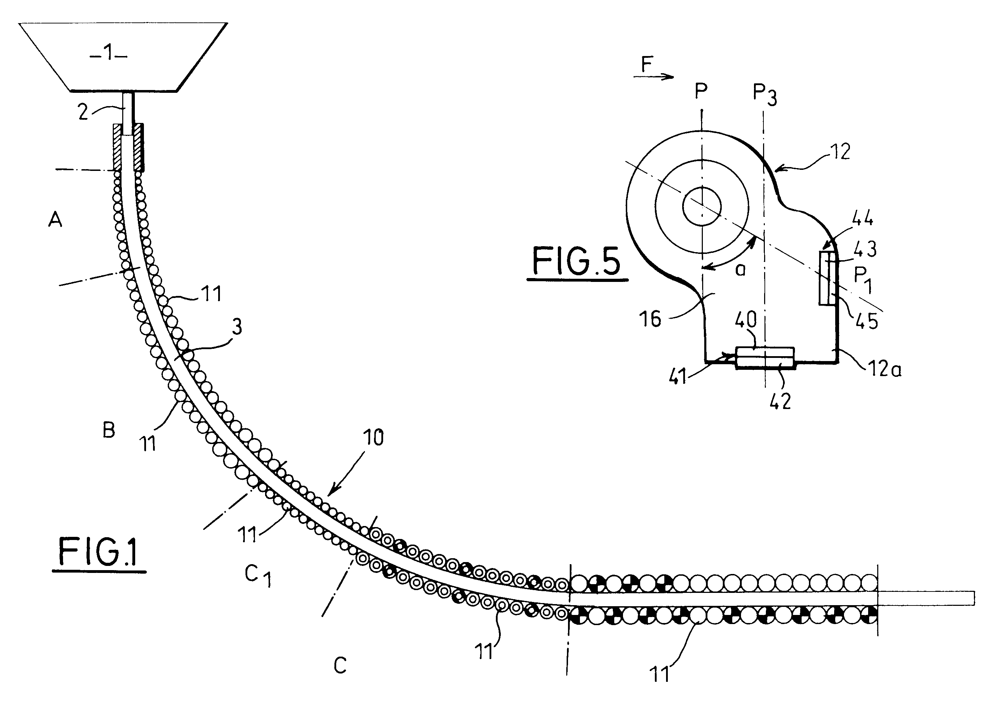

L'installation de coulée continue représentée schématiquement à la Fig. 1 comprend un répartiteur 1 dans lequel est coulé l'acier en fusion à partir d'une poche d'acier, non représentée.

L'acier en fusion issu du répartiteur 1 est introduit au moyen d'une busette 2 dans une lingotière courbe désignée dans son ensemble par la référence 10 où il commence sa solidification au contact avec les surfaces des parois internes de la lingotière refroidie.

La brame d'acier 3 dont les peaux sont solidifiées, 2 mais qui comporte encore un coeur d'acier liquide en son centre, est supportée par des rouleaux 11 de coulée continue disposés en vis à vis et regroupés en cages ou segments qui contiennent deux nappes opposées de rouleaux 11.

On peut ainsi distinguer une succession de zones :

- une zone A située sous le répartiteur 1 qui assure le supportage du produit au début de sa solidification,

- une zone B composée de plusieurs segments constituant chacun une partie de l'arc circulaire de l'ensemble dit du "refroidissement secondaire",

- une zone C composée de plusieurs segments d'extraction et de décintrage dans lesquels s'exercent les efforts de dressage du produit.

Dans la zone C d'extraction sont insérés des segments C1 particuliers dit de "réduction douce" comportant des rouleaux 11 de diamètre réduit et de pas plus court que ceux des autres segments.

Cette réduction douce est en particulier nécessaire pour améliorer par un léger laminage la compacité et l'homogénéité des brames 3.

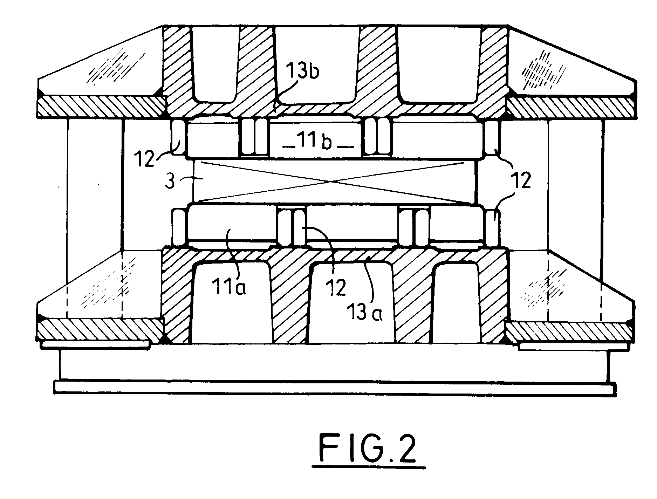

Comme représenté sur la Fig.2, les rouleaux inférieurs 11a sont supportés par des paliers 12 d'extrémité et intermédiaires. Ces paliers 12 sont montés sur une traverse inférieure 13a supportant les paliers des rouleaux 11a du segment correspondant.

Il en est de même pour les rouleaux supérieurs 11b qui sont supportés par des paliers 12 d'extrémité et intermédiaires.

Ces paliers 12 sont également montés sur une traverse supérieure 13b supportant les paliers des rouleaux 11b du segment correspondant.

La connaissance permanente de l'état de l'installation est un facteur indispensable à l'obtention de la qualité du produit et pour cela, il est nécessaire et fondamental de connaître les efforts appliqués sur les paliers 12 des rouleaux 11.

Ces efforts sont des efforts normaux perpendiculaires à la surface de la brame et/ou des efforts tangentiels ou de cisaillement dans le sens de défilement de ladite brame.

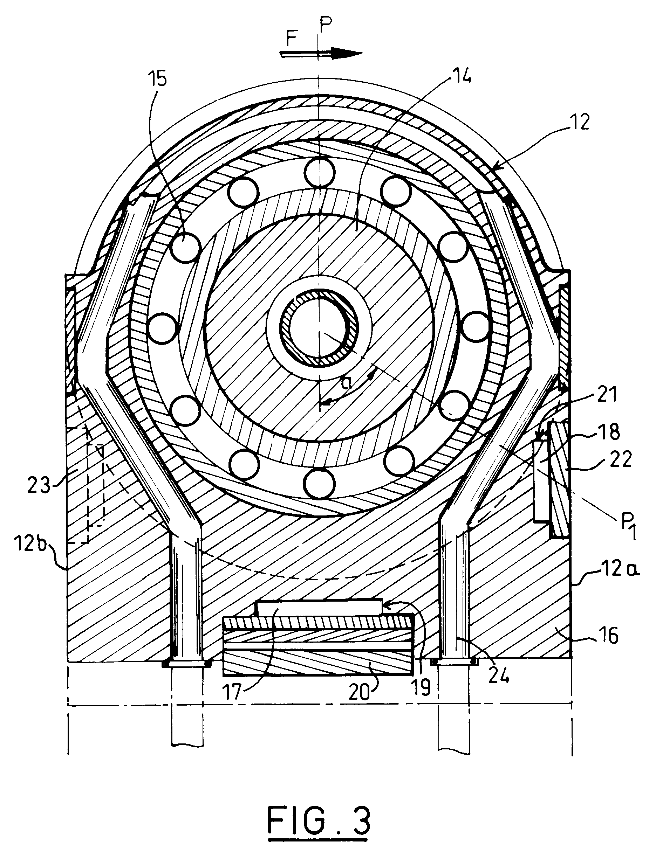

A cet effet, et comme représenté à la Fig. 3, chaque palier 12 comportant de manière classique un tourillon 14, un roulement 15 et un corps 16 est pourvu d'un dispositif de mesure des efforts.

Ce dispositif de mesure des efforts dans chaque palier 12 se compose d'au moins une jauge de contraintes de préférence deux 17 et 18 intégrées dans le corps 16 du palier.

La jauge de contraintes 17 est disposée dans une cavité 19 ménagée dans le fond du corps 16 et cette cavité 19 est fermée par une pièce d'obturation 20 qui sert également au centrage du palier sur la traverse-support correspondante.

Cette jauge de contraintes 17 mesure les efforts normaux appliqués au palier 12 et pour cela, elle est disposée dans un plan vertical P passant par l'axe dudit palier 12.

On appelle plan vertical le plan perpendiculaire à l'axe de la brame et passant par l'axe du palier.

La jauge de contraintes 18 est disposée dans une cavité 21 ménagée dans l'une des parois latérales 12a du palier 12 et cette cavité est fermée par une pièce d'obturation 22.

Cette jauge de contraintes 18 mesure les efforts tangentiels ou de cisaillement appliqués au palier 12 dans le sens de coulée indiquée par la flèche F sur la Fig. 3 et, à cet effet, elle est disposée dans un plan incliné P1 passant par l'axe dudit palier 12 et déterminant avec le plan vertical P un angle "a" sensiblement égal par exemple à 45°.

Les jauges de contraintes 17 et 18 sont reliées à un système de traitement de mesure par des connecteurs, non représentés.

Dans l'autre paroi latérale 12b du palier 12 est également prévue une cavité 23 symétrique par rapport à la cavité 21 pour éventuellement monter une jauge de contraintes et permettre ainsi de placer le palier 12 dans un sens ou dans l'autre.

Le corps 16 du palier peut comporter un circuit de refroidissement 24.

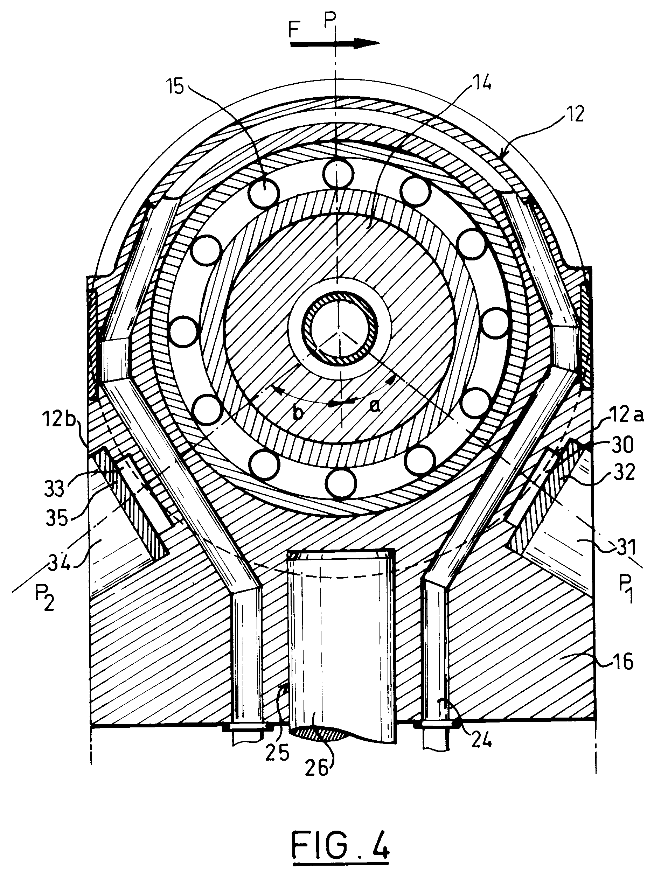

Dans certains cas, le corps 16 du palier 12 comporte dans son fond un évidement 25 pour un plot de centrage 26 (Fig. 4) ce qui ne permet pas le montage d'une jauge de contraintes dans un plan vertical P passant par l'axe du palier.

Dans ce cas, une jauge de contraintes 30 est disposée dans une cavité 31 ménagée dans l'une 12a des parois latérales du palier 12 et cette cavité 31 est fermée par une pièce d'obturation 32.

Cette jauge de contraintes 30 est disposée dans un plan incliné P1 passant par l'axe du palier 12 et déterminant avec le plan vertical P un angle "a" sensiblement égal par exemple à 45°.

De manière symétrique, une autre jauge de contraintes 33 est disposée dans une cavité 34 ménagée dans l'autre paroi latérale 12b du panier 12 et cette cavité 34 est également fermée par une pièce d'obturation 35.

Cette jauge de contraintes 33 est disposée dans un plan incliné P2 passant par l'axe du palier 12 et déterminant avec le plan vertical P un angle "b" sensiblement égal par exemple à 45°.

Les jauges de contraintes 30 et 33 mesurent les efforts normaux et tangentiels combinés et sont reliés à un système de traitement des mesures par des connecteurs, non représentés.

Dans le cas d'un palier 12 désaxé représenté à la Fig. 5, une jauge de contraintes 40 est disposée dans une cavité 41 ménagée dans le fond du corps 16 et cette cavité 41 est fermée par une pièce d'obturation 42 qui sert également au centrage du palier sur la traverse support correspondante.

Cette jauge de contraintes 40 mesure les efforts normaux appliqués au palier 12 et pour cela, elle est placée dans un plan vertical P3 parallèle au plan vertical P passant par l'axe dudit palier et le plus près possible de ce plan vertical P.

Une autre jauge de contraintes 43 est disposée dans une cavité 44 ménagée dans l'une 12a des parois latérales du palier 12 et cette cavité 44 est fermée par une pièce d'obturation 45.

Cette jauge de contraintes 43 mesure les efforts dans le sens de coulée indiqué par la flèche F sur la Fig. 5 et, à cet effet, elle est disposée dans un plan incliné P1 passant par l'axe dudit palier 12 et déterminant avec le plan vertical P un angle "a" sensiblement égale par exemple à 45°.

Les jauges de contraintes 40 et 43 sont également reliées à un système de traitement de mesure par des connecteurs, non représentés.

Le dispositif selon la présente invention permet donc de mesurer, dans le corps de chaque palier des rouleaux de l'installation de coulée continue, les efforts normaux ou les efforts tangentiels ou les deux ensembles appliqués sur les rouleaux lors de la coulée afin de connaître en permanence l'état de l'installation qui est un facteur nécessaire à l'obtention de la qualité du produit aussi bien qu'à la maîtrise de la disponibilité de cette installation.

Ce dispositif permet d'instrumenter des petits paliers et aussi bien des paliers d'extrémité que des paliers intermédiaires, notamment dans la zone dite de "réduction douce" et de détecter les efforts tangentiels et/ou les efforts normaux soit directement, soit par analyse des combinaisons des signaux pour provoquer par exemple un arrêt d'urgence si les efforts de cisaillement sont trop importants.

De plus, le dispositif selon la présente invention permet d'effectuer en continu un contrôle préventif de l'installation et de détecter tout déréglement et toute surcharge afin de permettre aux opérateurs et automatismes de prendre les mesures nécessaires à la protection des éléments. Le contrôle de l'application effective de l'effort moteur est également possible.

## Revendications

1. Dispositif de mesure des efforts appliqués sur les rouleaux (11) de coulée continue par exemple de brames, disposés en vis à vis et regroupés en segments qui contiennent deux nappes opposées de rouleaux (11), lesdits rouleaux (11) tournant dans des paliers d'extrémité et des paliers intermédiaires situés entre lesdits paliers d'extrémité, caractérisé en ce que chaque palier (12) est équipé d'au moins une jauge de contraintes et de préférence deux (17, 18 ; 30, 33 ; 40, 43) intégrées dans le corps (16) dudit palier (12), chaque jauge de contraintes (17, 18 ; 30, 33 ; 40, 43) étant montée dans une cavité (19, 21 ; 31, 34 ; 41, 44) ménagée dans le corps (16) dudit palier (12).

2. Dispositif selon la revendication 1, caractérisé en ce qu'une jauge de contraintes (17) est placée dans un plan vertical P passant par l'axe du palier (12) et perpendiculaire à l'axe de la brame pour mesurer les efforts normaux et une jauge de contraintes (18) est placée dans un plan incliné P1 passant par l'axe du palier (12) et déterminant avec ledit plan vertical P un angle sensiblement égal par exemple à 45° pour mesurer les efforts tangentiels dans le sens de coulée.

3. Dispositif selon les revendications 1 et 2, caractérisé en ce qu'une jauge de contraintes (17, 40) est diposée dans une cavité (19, 41) ménagée dans le fond du corps (16) du palier (12).

4. Dispositif selon les revendications 1 et 2, caractérisé en ce qu'une jauge de contraintes (18, 30, 33, 43) est disposée dans une cavité (21, 31, 34, 44) ménagée dans l'une des parois latérales (12a, 12b) du corps (16) du palier (12).

5. Dispositif selon la revendication 1, caractérisé en ce que les cavités (19, 21 ; 31, 34 ; 41, 44) sont fermées par une pièce d'obturation (20 ; 22 ; 32 ; 35 ; 42, 45).

6. Dispositif selon la revendication 1, caractérisé en ce que chaque jauge de contraintes (30, 33) est placée dans un plan incliné P1, P2 de part et d'autre d'un plan vertical P passant par l'axe du palier (12) et perpendiculaire à l'axe de la brame et déterminant avec ledit plan vertical un angle sensiblement égal par exemple à 45° pour les mesures combinées des efforts normaux et tangentiels.

7. Dispositif selon la revendications 1, caractérisé en ce qu'une jauge de contraintes (40) est placée dans un plan vertical P3 parallèle au plan vertical P passant par l'axe du palier (12) et perpendiculaire à l'axe de la brame pour mesurer les efforts normaux et une jauge de contraintes (43) est placée dans un plan incliné P1 passant par l'axe du palier (12) et déterminant avec ledit plan vertical P un angle sensiblement égal par exemple à 45° pour mesurer les efforts tangentiels.

FIG.5

FIG.1

13b

12

3

11b

12

11a

12

13a

FIG.2

FIG.3

FIG.4

**Office européen des brevets**

# RAPPORT DE RECHERCHE EUROPEENNE

Numero de la demande

EP 92 40 1614

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-2 713 632 (VEREINIGTE ÖSTERREICHISCHE EISEN- UND STAHLWERKE - ALPINE MONTAN AG) * le document en entier * | 1 | G01L5/00 G01L1/22 |
| Y | GB-A-2 019 017 (VEREINIGTE OSTERREICHISCHE EISEN- UND STAHLWERKE - ALPINE MONTAN AG) * abrégé; figures * | 1 | |
| Y<br>A | DE-A-2 930 520 (E. BROSA) * le document en entier * | 1<br>3,4 | |
| Y<br>A | DE-A-2 733 569 (INGENIEURBÜRO ENGEL) * le document en entier * | 1<br>4 | |
| Y<br>A | US-A-4 118 933 (W.H. COLEMAN ET. AL.) * le document en entier * | 1<br>6 | |
| Y<br>A | CH-A-604 147 (H. GRÜNBAUM) * le document en entier * | 1<br>3 | DOMAINES TECHNIQUES RECHERCHES (Int. Cl.5) |
| Y<br>A | FR-A-2 436 978 (SRO-KUGELLAGERWERKE J. SCHMID-ROOST AG.) * le document en entier * | 1<br>4 | G01L |

Le présent rapport a été établi pour toutes les revendications

| Lieu de la recherche | Date d'achèvement de la recherche | Examinateur |
|---|---|---|
| LA HAYE | 14 SEPTEMBRE 1992 | VAN ASSCHE P.O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P0402)